# EUROPEAN PATENT SPECIFICATION

(11) **EP 2 676 335 B1**
(45) Date of publication and mention of the grant of the patent: **08.04.2020**
(21) Application number: 12707921.8
(22) Date of filing: 09.02.2012
(51) Int. Cl.: H01R 13/66, H02G 3/18, H01R 13/506, H01R 13/74, H02M 7/00

(54) **BUILT-IN MULTI-PURPOSE OUTLET UNIT WITH USB POWER SUPPLY**
INTEGRIERTE MEHRZWECK-AUSGANGSEINHEIT MIT USB-STROMVERSORGUNG
UNITÉ DE SORTIE POLYVALENTE INTÉGRÉE, À ALIMENTATION ÉLECTRIQUE USB

(30) Priority: 15.02.2011 IT PD20110044
(43) Date of publication of application: 25.12.2013
(73) Proprietor: Fanton S.p.A., 35026 Conselve (Padova) (IT)
(72) Inventor: CHEMELLO, Luigi, I-35026 Conselve (PD) (IT)
(74) Representative: Vinci, Marcello
(86) International application number: PCT/IB2012/050584
(87) International publication number: WO 2012/110921

(56) References cited:
- CN-Y- 201 213 213
- DE-A1- 3 612 318
- US-A1- 2003 151 938
- US-A1- 2008 050 967

## Description

The present application relates to built-in multi-purpose outlet units and in particular relates to a new module with a USB power supply socket suited to be applied to common supporting plates of built-in outlet units.

Power and switching modules applicable to supporting plates attached to recessed wall boxes are already known. Power and switching modules can be sockets, switches, deviator switches, dimmers or other electrical and/or electronic devices.

All power and switching modules of the known art have a visible front side, usually bearing the control lever of the switch, the deviator switch, the dimmer wheel or other visible or control components, and a rear side housed inside the recessed box installed in the wall, equipped with terminals for the connection of power supply and/or electric control and/or communication cables.

Along one or more edges of the visible front side, all power and switching modules have anchoring elements and hook/release systems for the supporting plate.

Adapters similar to the front side of power and switching modules of the known art comprising a fixing element for the supporting plate of built-in boxes are known and used for the fixing of telephone or LAN sockets to supporting plates.

An element commonly called a *keystone* is attached to said adapters, which constitutes the telephone or LAN socket or an outlet of another type.

The known art includes portable power supply adapters equipped with USB sockets, consisting substantially of electrical transformers with a USB socket, housed in a plastic casing equipped with plugs and contacts for the insertion and connection to common electrical outlet units.

Portable devices of different types are increasingly popular, including handheld computers, mobile phones, music and/or video players and *Bluetooth* headsets which are designed to charge their battery by connecting the device to a computer USB port or to a portable adapter equipped with a cable with a USB female terminal.

The use of a computer port requires the presence and availability of a computer. A computer with its battery charged or connected to a power supply to recharge the battery of another portable device is not always present and available.

Portable adapters based on transformers are bulky to carry in briefcases or pockets, and are often forgotten or left at home, the workplace or even in the car.

A simple USB connection cable is relatively easy to find or to borrow. In addition, a simple USB cable is less bulky to transport.

US 2003/151938 A1, US 2008/050967 A1 and CN 201 213 213 Y disclose prior art examples of built-in multi-purpose outlet units.

The object of the present patent is a new power module equipped with a USB power supply applicable to supporting plates of built-in outlet units. The purpose of the new power transformer outlet unit with a USB power supply socket is to allow its installation on common *keystone* power and switching modules.

These and other objectives, direct and complementary, are achieved by the built-in multi-purpose outlet unit according to claim 1.

The container casing has a shape and dimensions substantially equal to the part of a common outlet unit applicable to supporting plates which is not visible.

This container casing is composed of two parts, the first part of which is substantially parallelepiped and missing one side, and the second part suited to close the open side of the first part and has a projecting parallelepiped portion in the shape of a *keystone* unit.

In particular, this projecting portion has side couplings suitable for fixing it to the *keystone* adapters and a hole or front opening suitable for housing a power supply socket or to allow the passage of USB plugs.

This container casing is made of electrically insulating material, such as self-extinguishing plastic.

The electric/electronic circuit is shaped and dimensioned so as to be housed in the container casing. The USB socket of the electric/electronic circuit is housed in the hole or opening of the projecting portion of the container casing.

The electric/electronic circuit has terminals for connecting cables providing the mains electric current.

In particular, the electric/electronic circuit transforms the mains alternating current at 220V or 110V to direct current at 5V supplying it to the proper contacts of the USB socket.

The new multi-purpose outlet unit thus constituted can be mounted and fixed to existing *keystone* outlet adapters.

The new multi-purpose outlet thus constituted and fixed to a *keystone* outlet adapter, can be fixed to common supporting plates and housed in common built-in container casings installed in walls.

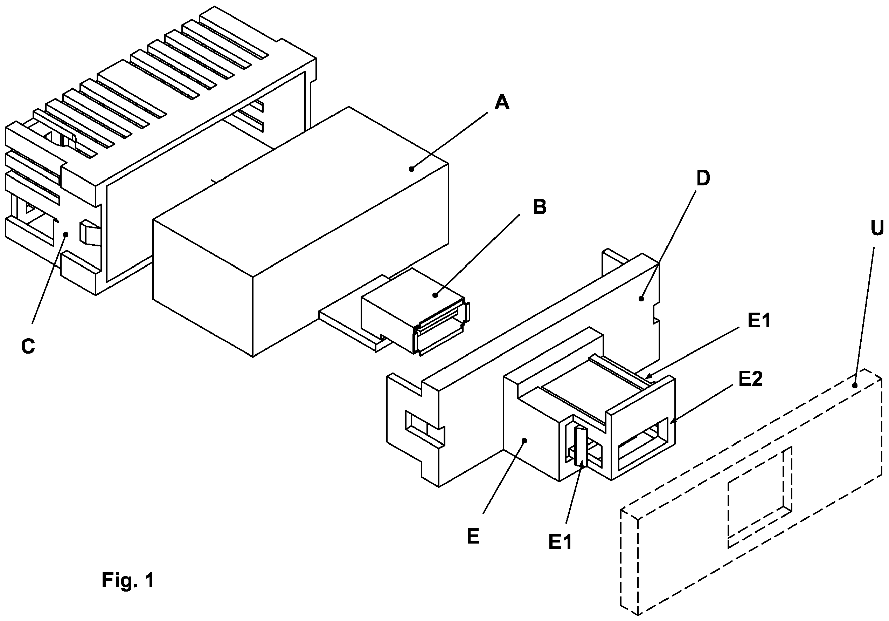

The characteristics of the new multi-purpose outlet unit with USB power supply will be better explained by the following description with reference to the drawing attached by way of non-limiting example.

The figure shows the different parts of the new multi-purpose outlet unit with USB power supply comprising an electrical/electronic circuit (A) for transforming the mains electric current which also comprises a USB socket (B), and at least one housing container (C, D, E).

The container casing (C, D, E) has a shape and dimensions substantially equal to the body of a common outlet unit applicable to supporting plates which is not visible.

The container casing (C, D, E) comprises at least two parts, the first of which is a substantially parallelepiped part (C) missing one side and a second part (D) of which is suited to close the open side of the first part (C) and has a projecting parallelepiped portion (E) in the shape of a *keystone* unit.

In particular, the projecting portion (E) has side couplings (E1) for fixing it to adapters (U) for *keystone* outlets and a front hole or opening (E2) for the housing of a USB socket or the passage of a USB plug.

The container casing (C, D, E) is made of electrically insulating material, such as self-extinguishing plastic.

The electric/electronic circuit (A) has a shape and size suited to be housed in the container casing (C, D, E). The USB socket (B) of the electric/electronic circuit (A) is housed in the relative hole or opening (E2) of the projecting portion (E) of said container casing (C, D, E).

Said electric/electronic circuit (A) has terminals, not shown in the figure, for the connection to the mains electric current.

Said electric/electronic circuit (A) transforms the mains alternating current at 220V or 110V into direct current at 5V supplying it to the proper contacts of the USB socket (B).

Therefore, with reference to the preceding description and the attached drawing the following claims are made.

## Claims

1. Built-in multi-purpose outlet unit comprising at least one container casing (C, D) and at least one electric/electronic circuit (A) having at least one USB socket (B) and being suited to transform mains alternate current at 220V or 110V into 5V direct current, delivering it to specified contacts of the USB socket (B), said container casing (C, D) comprising:
• a first rear part (C) substantially parallelepiped-shaped and with an open side suited to contain said electric/electronic circuit (A) and to be housed in common built-in container casings installed in walls;
• a second front part (D) suited to be coupled with and to close the open side of said first rear part (C) and having the shape of a common outlet unit fixable to supporting plates, said second front part (D) being provided with front holes and/or openings (E2) suited to house the at least one USB socket (B) of the electric/electronic circuit (A),
**characterized in that** said second front part (D) of said container casing (C, D) comprises at least one parallelepiped element (E) having the shape of a *keystone* unit, provided with the front holes or openings (E2) suited to house the USB sockets (B) of the electric/electronic circuit (A) or to allow the passage of a USB plug, and wherein said parallelepiped element (E) in the shape of a *keystone* unit is provided with couplings (E1) on its perimeter for fixing it to adapters (U) on the supporting plates of the wall sockets.

2. Built-in multi-purpose outlet unit according to claim 1, **characterized in that** said electric/electronic circuit (A) is provided with terminals for connecting cables providing the mains electric current.

## Patentansprüche

1. Unterputz-Mehrzweckschalteinsatz, wenigstens ein Behälter-Gehäuse (C, D) sowie wenigstens eine elektrische/elektronische Schaltung (A) mit wenigstens einer USB-Buchse (B) umfassend, und dazu geeignet, eine 220 V- oder 110 V-Wechselstrom der Netzstromversorgung in 5 V-Gleichstrom umzuwandeln und an bestimmte Kontakte der USB-Buchse (B) zu leiten, wobei das besagte Behälter-Gehäuse (C, D) Folgendes umfasst:
• einen ersten hinteren Teil (C), der im Wesentlichen parallelflach geformt ist und eine offene Seite aufweist, die dazu geeignet ist, die besagte elektrische/elektronische Schaltung (A) zu enthalten und in normalen, in Wänden unter Putz installierten Behälter-Gehäusen aufgenommen zu werden;
• einen zweiten Frontteil (D), dazu geeignet, mit der besagten offenen Seite des besagten ersten hinteren Teils (C) gekuppelt zu werden und diese zu schließen, und der die Form eines normalen, an Trägerplatten fixierbaren Schalteinsatzes aufweist, wobei der besagte zweiten Frontteil (D) mit vorderen Bohrungen und/oder Öffnungen (E2) versehen ist, die dazu geeignet sind, wenigstens eine USB-Buchse (B) der elektrischen/elektronischen Schaltung (A) aufzunehmen,
**dadurch gekennzeichnet, dass** der besagte zweite Frontteil (D) des besagten Behälter-Gehäuses (C, D) wenigstens ein parallelflaches Element (E) umfasst, das die Form einer Keystone-Einheit hat, welche mit den Frontbohrungen oder -öffnungen (E2) versehen ist, die dazu geeignet sind, die USB-Buchsen (B) der elektrischen/elektronischen Schaltung (A) aufzunehmen oder den Durchgang eines USB-Steckers zu erlauben, und wobei das besagte parallelflache Element (E) in der Form einer Keystone-Einheit an seinem Umfang mit Kupplungen (E1) versehen ist, um es an Adaptern (U) auf den Trägerplatten der Wandbuchsen zu befestigen.

2. Unterputz-Mehrzweckschalteinsatz nach Patentanspruch 1, **dadurch gekennzeichnet, dass** die besagte elektrische/elektronische Schaltung (A) mit Anschlussklemmen zum Anschluss von Kabeln versehen ist, die die Netzstromversorgung liefern.

## Revendications

1. Unité de prise intégrée à usages multiples comprenant au moins un boîtier-containeur (C, D) et au moins un circuit électrique/électronique (A) ayant au moins une prise USB (B) et étant indiqué pour transformer le courant alternatif d'alimentation secteur à 220V ou 110V en courant continu de 5V, en le distribuant à des contacts spécifiques de la prise USB (B), ledit boîtier-containeur (C, D) comprenant :
- une première partie arrière (C) de forme essentiellement parallélépipède et avec un côté ouvert indiqué pour contenir ledit circuit électrique/électronique (A) et pour être logé dans des boîtiers-containeurs intégrés communs installés dans des parois;
- une deuxième partie avant (D) indiquée pour être accouplée avec le côté ouvert de ladite première partie arrière (C) et pour le fermer et ayant la forme d'une unité de sortie commune qui peut être fixée à des plaques de support, ladite deuxième partie avant (D) étant dotée de trous et/ou d'ouvertures avant (E2) indiquées pour loger l'au moins une prise USB (B) du circuit électrique/électronique (A),
**caractérisée en ce que** ladite deuxième partie avant (D) dudit boîtier-containeur (C, D) comprend au moins un élément parallélépipède (E) ayant la forme d'une unité *keystone,* doté de trous ou ouvertures avant (E2) indiqués pour loger les prises USB (B) du circuit électrique/électronique (A) ou pour consentir le passage d'une fiche USB, et où ledit élément parallélépipède (E) ayant une forme d'unité *keystone* est doté de raccordements (E1) sur son périmètre pour la fixer à des adaptateurs (U) sur les plaques de support des prises murales.

2. Unité de prise intégrée à usages multiples selon la revendication 1, **caractérisée en ce que** ledit circuit électrique/électronique (A) est doté de bornes pour la connexion des câbles qui alimentent le courant électrique de réseau.
